# EUROPÄISCHE PATENTANMELDUNG

(11) **EP 4 388 886 A1**
(43) Veröffentlichungstag der Anmeldung: **26.06.2024**
(21) Anmeldenummer: 23171499.9
(22) Anmeldetag: 04.05.2023
(51) Int. Cl.: A23G 3/02, A23G 3/50

(54) **MISCHEINRICHTUNG UND FORMMASCHINE**

(30) Priorität: 23.12.2022 EP 22216508
(71) Anmelder: Krüger und Salecker Maschinenbau GmbH & Co. KG, 23611 Bad Schwartau (DE)
(72) Erfinder: ROSE, Kay, 23617 Stockelsdorf (DE); DRZEWIECKI, Tim, 23623 Ratekau (DE); HORNSCHUCH, Stephan, 41238 Mönchengladbach (DE)
(74) Vertreter: Patentanwälte Hemmer Lindfeld Frese Partnerschaft mbB

(57) **Zusammenfassung**

Die Erfindung betrifft eine Mischeinrichtung (32) ausgebildet zur kontinuierlichen Bereitstellung einer gelierenden Masse (8) für eine Formmaschine, wobei die Mischeinrichtung einen Eingang (38), einen Ausgang (44) und einen zwischen dem Eingang und dem Ausgang gelegenen Leitungsabschnitt (36) aufweist, in welchen zumindest eine Zumischleitung (50) mündet, über die eine zuzumischende Substanz (56) derart zuführbar ist, dass in einem Mischbereich (58) in dem Leitungsabschnitt die zuzumischende Substanz mit einer durch den Eingang zugeführten Grundmasse (42) gemischt wird, wobei, dass die Mischeinrichtung derart ausgestaltet ist, dass der räumliche Abstand zwischen dem Ausgang und dem Mischbereich, in welchem die zuzumischenden Substanz mit der Grundmasse gemischt wird, veränderbar ist, sowie eine Formmaschine mit einer solchen Mischeinrichtung und ein Verfahren zum Verarbeiten einer fließfähigen und gelierbaren Masse.

## Beschreibung

Die Erfindung betrifft eine Mischeinrichtung ausgebildet zur kontinuierlichen Bereitstellung einer gelierenden Masse für eine Formmaschine sowie für ein Verfahren zum Verarbeiten einer fließfähigen und gelierbaren Masse.

Verschiedenste Produkte, insbesondere Nahrungsmittel werden aus aushärtenden bzw. gelierenden Massen geformt. Derartige Produkte können beispielsweise Fruchtgummis sein.

Fruchtgummis werden bislang z.B. in der Weise hergestellt, dass Negativformen der Produkte in ein Stärkebett gedrückt werden, welche im Anschluss mit der erwärmten Fruchtgummimasse gefüllt werden. Zum Aushärten müssen die Formen über mehrere Stunden kühlen, damit die Produkte so weit gelieren können, dass sie aus der Form entnommen werden können, wobei die Form zerstört wird und das Stärkemehl gegebenenfalls zum Herstellen neuer Formen wiederverwendet werden kann. Dieser Prozess ist sehr aufwendig und zeitintensiv und benötigt viel Platz zur Lagerung der Formen während der Aushärtung der Produkte.

Um eine kontinuierliche Formung und Verarbeitung einer gelierenden Masse in einer Formmaschine zu ermöglichen, ist es wesentlich, dass die Masse zeitlich genau gesteuert in der Formmaschine geliert.

Es ist Aufgabe der Erfindung, eine Mischeinrichtung zur kontinuierlichen Bereitstellung einer gelierenden Masse für eine Formmaschine sowie ein Verfahren zur Verarbeitung einer fließfähigen und gelierbaren Masse bereitzustellen, welche es ermöglichen, das Gelieren zum richtigen Zeitpunkt in der Formmaschine zu gewährleisten.

Diese Aufgabe wird gelöst durch eine Mischeinrichtung mit den im Anspruch 1 angegeben Merkmalen, durch eine Formmaschine mit den im Anspruch 9 angegebenen Merkmalen sowie durch ein Verfahren mit den im Anspruch 12 angegebenen Merkmalen. Bevorzugte Ausgestaltungen ergeben sich aus den Unteransprüchen, der nachfolgenden Beschreibung sowie den beigefügten Figuren.

Die erfindungsgemäße Mischeinrichtung ist dazu ausgebildet, in einem kontinuierlichen Prozess eine gelierende bzw. gelierfähige Masse für eine Formmaschine bereitzustellen. Dabei ist es Aufgabe der Mischeinrichtung einer Grundmasse eine Substanz zuzumischen, welche vorzugsweise den Geliervorgang startet bzw. aktiviert. Die Mischeinrichtung ist somit bevorzugt im Prozess einer weiteren Verarbeitungseinrichtung, gegebenenfalls einer weiteren Mischeinrichtung nachgelagert, welche die Grundmasse bereitstellt. Die Grundmasse kann beispielsweise eine zuckerhaltige Masse zum Herstellen eines Fruchtgummis sein. Die Mischeinrichtung weist einen Eingang, einen Ausgang und einen zwischen dem Eingang und dem Ausgang gelegenen Leitungsabschnitt. Die bereitgestellte Grundmasse tritt in den Eingang ein, fließt durch die Leitungsabschnitt und tritt aus dem Ausgang wieder aus. Der Leitungsabschnitt kann gegenüber sich anschließenden Leitungsabschnitten vergrößert ausgebildet sein, um einen Pufferraum bzw. ein Puffervolumen in der Zuführung für die Masse zu bilden. Um das Fließen der Masse durch den Leitungsabschnitt zu bewirken, ist vorzugsweise eine Fördereinrichtung, wie eine Pumpe im Strömungsweg für die Masse, beispielsweise stromabwärts des Eingangs und/oder stromabwärts des Ausganges gelegen. In dem Leitungsabschnitt mündet eine Zumischleitung, über die eine zuzumischende Substanz zuführbar ist. Die Zumischleitung kann beispielsweise mit einer Dosierpumpe verbunden sein, über welche die Substanz der Zumischleitung zugeführt wird und dosiert wird. Über die Zumischleitung ist die zuzumischende Substanz derart zuführbar, dass die Substanz in einem Mischbereich in dem Leitungsabschnitt mit der durch den Leitungsabschnitt fließenden Grundmasse gemischt wird. So wird ein kontinuierlicher Zumischprozess in dem Leitungsabschnitt ermöglicht.

Erfindungsgemäß ist die Mischeinrichtung derart ausgestaltet, dass der räumliche Abstand zwischen dem Ausgang des Leitungsabschnittes und dem Mischbereich, in welchem die zuzumischende Substanz mit der Grundmasse gemischt wird, veränderbar ist. Dadurch wird die Förderstrecke, durch welche die gemischte Masse von dem Mischbereich zu dem Ausgang fließt, verändert. Dies ermöglicht es, die Verweildauer in dem Leitungsabschnitt stromabwärts des Mischbereiches zu verändern bzw. anzupassen. Wenn beispielsweise die Verweildauer konstant gehalten werden soll, aber die Fließgeschwindigkeit sich ändert, weil beispielsweise die Abnahmemenge der Masse stromabwärts des Ausganges geändert wird, ist es möglich, den Abstand zwischen Mischbereich und Ausgang so anzupassen, dass die Verweildauer im Wesentlichen konstant bleibt. Das heißt, bei Erhöhung der Fließgeschwindigkeit wird der Abstand vergrößert und bei einer Verringerung der Fließgeschwindigkeit der Abstand verkürzt. Eine solche Anpassung kann beispielsweise erforderlich sein, wenn die Formen in der Formmaschine geändert werden. Wenn kleinere Produkte geformt werden, wird weniger Masse benötigt und die Abnahmemenge und damit die Fließgeschwindigkeit in der Zuführung verringert sich. Bei größeren Formen muss mehr Masse zugeführt werden, weshalb die Fließgeschwindigkeit erhöht wird.

Mit der erfindungsgemäßen Ausgestaltung ist es jedoch nicht nur möglich, die Verweildauer in der Zuführung für die gelierende Masse bei sich ändernden Fließgeschwindigkeiten im Wesentlichen konstant zu halten. Es ist ferner möglich, die Verweildauer an unterschiedliche Produkte bzw. Massen anzupassen, beispielsweise abhängig von der Gelierzeit, das heißt der Zeitspanne, welche vom Zumischen der Substanz bis zum Gelieren vergeht. So ist es möglich, die Anlage an unterschiedliche Rezepturen für verschiedene Produkte anzupassen. Die Anpassbarkeit ermöglicht es, die Verweildauer in der Massezuführung zu der Formmaschine so einzustellen, dass ein Aushärten bzw. Gelieren genau zum richtigen Zeitpunkt in der Formmaschine erfolgt, sodass die Masse der Formmaschine im fließfähigen Zustand zugeführt werden kann, der Formmaschine dann aber ein ausreichend ausgehärtetes bzw. geliertes Produkt nach einer vorbestimmten Zeit entnommen werden kann. So wird sichergestellt, dass der Geliervorgang zum optimalen Zeitpunkt in der Form beginnt bzw. stattfindet. Wenn als Grundmasse eine pektinhaltige Zuckermasse verwendet wird, kann als Substanz zum Aktivieren des Geliervorganges vorzugsweise eine Säure zugemischt werden. Für diesen Fall ist es vorteilhaft, wenn die Zumischleitung mit einer Säurezufuhr bzw. Säure-Dosiereinrichtung verbunden ist.

Gemäß einer ersten möglichen Ausgestaltung der Erfindung weist die zumindest eine Zumischleitung mehrere Mündungsöffnungen auf, welche von dem Ausgang unterschiedlich weit beabstandet sind und individuelle Absperreinrichtungen aufweisen. Die Absperreinrichtungen können manuell zu betätigende der Absperreinrichtungen oder auch ansteuerbare Absperreinrichtungen, beispielsweise elektrisch oder pneumatisch aktivierte Absperreinrichtungen sein. Durch die Absperreinrichtungen können die Mündungsöffnungen wahlweise geöffnet oder geschlossen werden. Je nach dem welche der mehreren Mündungsöffnungen geöffnet wird, kann der Abstand des Mischbereiches von dem Ausgang verändert werden. Wenn eine nahe zu dem Ausgang gelegenen Mündungsöffnung geöffnet wird und die anderen Mündungsöffnungen geschlossen sind, wird der Abstand verkürzt. Umgekehrt kann durch Öffnen einer weiter entfernt vom Ausgang gelegenen Mündungsöffnung umschließenden näher zu dem Ausgang gelegenen Mündungsöffnungen der Abstand verkürzt werden.

Gemäß einer weiteren möglichen Ausgestaltung der Erfindung weist die zumindest eine Zumischleitung zumindest eine Mündungsöffnung auf, deren Position relativ zu dem Auslass veränderbar ist. Bei dieser Ausgestaltung kann beispielsweise ein die Mündungsöffnungen aufweisendes Bauteil in seiner Position relativ zu dem Auslass veränderbar sein, beispielsweise verschieb- oder verstellbar angeordnet sein.

Gemäß einer weiteren möglichen Ausführungsform der Erfindung ist die zumindest eine Zumischleitung, welche zumindest eine Mündungsöffnung aufweist, mit einer Einstelleinrichtung verbunden, über welche der Abstand zwischen der zumindest einen Mündungsöffnung und dem Ausgang veränderbar ist. Diese Einstelleinrichtung kann so ausgebildet sein, dass der Abstand der Mündungsöffnung von außerhalb des Leitungsabschnittes veränderbar ist. Das heißt der Leitungsabschnitt muss zum Einstellen nicht geöffnet werden. Die Einstelleinrichtung kann manuell betätigbar sein, kann in einer besonderen Ausführungsform jedoch auch einen Stellantrieb aufweisen, beispielsweise einen elektrisch oder pneumatisch betätigten Stellantrieb. Dies ermöglicht es, die Einstelleinrichtung beispielsweise über eine Anlagensteuerung einzustellen, um eine automatisierte Anpassung beispielsweise bei einer Rezept- oder Formänderung zu ermöglichen.

In besonderer Ausgestaltung können auch mehrere Zumischleitungen in entsprechender Ausgestaltung vorhanden sein, beispielsweise um verschiedene Substanzen zumischen zu können. Dabei können die Mischbereiche für die verschiedenen Substanzen gemeinsam oder auch unabhängig voneinander in ihrem Abstand zum Ausgang veränderbar sein, wobei dies vorzugsweise in der vorangehend beschriebenen Weise ermöglicht wird.

Die Mischeinrichtung weist in dem Leitungsabschnitt bevorzugt einen stationären Mischer auf, in welchem die zumindest eine Zumischleitung mündet. Die Position des stationären Mischers relativ zu dem Ausgang ist bevorzugt veränderbar, besonders bevorzugt gemeinsam mit einer Mündungsöffnung der Zumischleitung veränderbar. Die Zumischleitung mündet bevorzugt am stromaufwärtigen Ende des stationären Mischers, sodass die zugemischte Substanz gemeinsam mit der Grundmasse in den stationären Mischer eintritt und beim Fließen durch den stationären Mischer eine Vermischung von Substanz und Grundmasse stattfindet. Der stationäre Mischer kann beispielsweise durch feststehende Schaufeln, Führungselemente oder ähnliches gebildet sein. Alternativ oder zusätzlich kann auch ein bewegter Mischer in den Leitungsabschnitt angeordnet sein, um Substanz und Grundmasse zu vermischen.

Die Zumischleitung ist gemäß einer möglichen Ausgestaltung der Erfindung als Zumischrohr ausgebildet, welches sich durch eine Ausnehmung in einer Wandung des Leitungsabschnittes erstreckt und in der Ausnehmung axial in Richtung seiner Längsachse verschiebbar ist. Die Führung des Zumischrohres in der Ausnehmung ist dabei bevorzugt derart gedichtet ausgebildet, dass keine Masse aus dem Inneren des Leitungsabschnittes nach außen treten kann. Die Mündungsöffnung der Zumischleitung ist bevorzugt in dem Zumischrohr ausgebildet oder an dem Zumischrohr angeordnet. Beispielsweise kann das Zumischrohr am Ende offen ausgebildet sein, sodass das offene Ende die Mündungsöffnung bildet. Durch die axiale Verschiebung des Zumischrohres kann somit die Position der Mündungsöffnung in dem Leitungsabschnitt verändert werden. Dabei erstreckt sich die Längsachse des Zumischrohres weiter bevorzugt in Richtung einer durch den Eingang und den Ausgang definierten Strömungsrichtung, das heißt der Fließrichtung der Masse durch den Leitungsabschnitt. Auf diese Weise kann die Mündungsöffnung relativ zu dem Ausgang in ihrer Position verändert werden, wenn das Zumischrohr in der Ausnehmung verschoben wird, sodass es sich unterschiedlich weit in den Leitungsabschnitt hinein erstreckt.

Bevorzugt liegt der Eingang an einem ersten Ende des Leitungsabschnittes, während der Ausgang nahe einem entgegengesetzten zweiten Ende des Leitungsabschnittes gelegen ist. Ein Zumischrohr erstreckt sich vorzugsweise durch eine Wandung des Leitungsabschnittes, welche stirnseitig an einem der axialen Enden gelegen ist, vorzugsweise durch eine Wandung, welche an demjenigen Ende des Leitungsabschnittes gelegen ist, an dem sich der Ausgang befindet. Der Leitungsabschnitt kann beispielsweise rohrförmig ausgebildet sein und an einem Ende durch eine Wandung stirnseitig verschlossen sein. An diesem Ende kann sich der Ausgang in radialer Richtung aus dem Leitungsabschnitt heraus erstrecken, sodass es möglich ist, die Ausnehmung zur Anordnung des Zumischrohres in der Wandung anzubringen, welche die Stirnseite verschließt.

Die Mischeinrichtung weist weiter bevorzugt stromaufwärts des Einganges zumindest einer Förderpumpe zum Fördern der Grundmasse auf. Diese Förderpumpe kann als Dosierpumpe ausgebildet sein, um einen definierten Zufluss und Durchfluss von Grundmasse in dem Leitungsabschnitt zu gewährleisten.

Neben der vorangehend beschriebenen Mischeinrichtung ist Gegenstand der Erfindung eine Formmaschine zum Herstellen von formstabilen Produkten aus einer formbaren und gelierbaren Masse, wobei die Formmaschine eine Mischeinrichtung aufweist, wie sie vorangehend beschrieben wurde und welche dazu ausgebildet ist, die formbare Masse bereitzustellen und einer Formeinrichtung zuzuführen. Der in der Mischeinrichtung unterschiedlich positionierbare Mischbereich ermöglicht es dabei, die Zeitspanne, die die zu formende Masse von dem Mischbereich bis in die Form benötigt, anzupassen bzw. einzustellen.

Die Formmaschine weist vorzugsweise eine rotierend angetriebene Formwalze auf, in deren Mantelfläche Formvertiefungen ausgebildet sind. Der Ausgang der bestehenden Mischeinrichtung ist bevorzugt mit einer Fülleinrichtung der Formwalze, insbesondere einem Füllbereich zwischen einer Füllwalze und der Formwalze verbunden, sodass die in der Mischeinrichtung gemischte Masse der Formwalze zugeführt wird und dann in den Formvertiefungen der Formwalze ausgeformt wird. Dabei wird die Zeitspanne für die Zufuhr der gemischten Masse so eingestellt, dass das Gelieren bevorzugt im Wesentlichen erst in den Formvertiefungen stattfindet. So wird die Masse bis zum Eintritt in die Formvertiefungen fließfähig gehalten und härtet dann in den Formvertiefungen zumindest an der Oberfläche so weit aus, dass die Produkte formstabil sind und den Formvertiefungen entnommen werden können.

Die Formmaschine ist weiter bevorzugt oder alternativ ausgestaltet und vorgesehen zum Herstellen von Produkten aus einer Masse mit einer Viskosität im Bereich von 10000 bis 80000 mPas. Eine solche Formmaschine kann auch ohne die vorangehend beschriebene Mischeinrichtung ausgebildet sein, d.h. die Masse kann in anderer Weise bereitgestellt werden, ggf. auch ohne spätere Zumischung einer weiteren Substanz. Bei der Masse mit einer Viskosität im Bereich von 10000 bis 80000 mPas handelt es sich um eine Masse, welche vor dem Formen die genannte Viskosität hat und sich dann verfestigt, beispielsweise durch Gelieren oder Abkühlen, und dadurch einen im Wesentlichen formstabilen Zustand annimmt. Solche Produkte können z.B. Nahrungsmittel oder Nahrungsmittel mit aktiven oder funktionalen Zusatzstoffen oder andere fließfähige Stoffe mit entsprechender Viskosität sein, die sich beispielsweise durch einen Aktivator oder Abkühlen verfestigen. So kann die Masse z.B. eine Fruchtgummimasse sein, sodass die Formmaschine zur Produktion von Fruchtgummis ausgebildet ist. Eine solche Masse kann jedoch auch eine andere Masse zur Herstellung von Süßwaren oder auch nicht süßen Lebensmitteln sein. Darüber hinaus können auch andere Produkte mit der Formmaschine gefertigt werden, für welche eine Masse, welche in dem genannten Viskositätsbereich bereitgestellt wird, in einer Form aushärten muss. Besonders bevorzugt ist die Masse eine Geliermittel enthaltende Masse, wobei die Masse z.B. beim Abkühlen und/oder nach einer gewissen Zeit geliert und am Ende eine elastische beziehungsweise gelartige Struktur annimmt.

Die Formmaschine weist bevorzugt eine rotierend angetriebene Formwalze auf, in deren Mantel- bzw. Oberfläche Formvertiefungen beziehungsweise Formnester ausgebildet sind, welche die Negativform des zu formenden Produktes aufweisen. Die Formwalze kann beispielsweise aus Metall, z.B. Aluminium, oder Kunststoff gefertigt sein. Die Walze rotiert um ihre Längsachse. Dabei wird die Formwalze vorzugsweise kontinuierlich drehend angetrieben, sodass ein kontinuierlicher Formprozess mit der Formmaschine realisiert wird. Während der kontinuierlichen Drehung werden die Formvertiefungen mit der Masse, welche eine Viskosität im Bereich von 10000 mPas bis 80000 mPas hat, gefüllt und an einer anderen Position werden die fest gewordenen Produkte aus den Formvertiefungen wieder entnommen. Das Verfestigen der Masse erfolgt während der Drehung der Walze in den Formvertiefungen.

Die Formmaschine weist in einer weiteren möglichen Ausgestaltung zumindest eine beabstandet zu der Formwalze angeordnete, ebenfalls rotierend angetriebene und vorzugsweise beheizte Füllwalze auf. Die Drehachse der Füllwalze erstreckt sich parallel zu einer Drehachse der Formwalze. Die Formwalze und die zumindest eine Füllwalze können über einen gemeinsamen Antrieb angetrieben werden, aber auch mit separaten Antrieben, insbesondere elektrischen Antriebsmotoren versehen sein. Die Formwalze und die Füllwalze werden vorzugsweise so angetrieben, dass ihre Mantel- bzw. Oberflächen sich im Wesentlichen mit derselben Geschwindigkeit bewegen. Das heißt, bei unterschiedlichen Durchmessern werden die Walzen vorzugsweise unterschiedlich schnell angetrieben. Bevorzugt ist die Formwalze im Durchmesser größer als die Füllwalze, sodass die Füllwalze mit einer höheren Drehgeschwindigkeit angetrieben wird. Zwischen der zumindest einen Füllwalze und der Formwalze ist zumindest ein Abstandselement angeordnet, welches den Spalt beziehungsweise Freiraum zwischen der Füllwalze und der Formwalze verschließt. So ist das Abstandselement mit der Mantelfläche der Füllwalze und mit der Mantelfläche der Formwalze in Kontakt. Die Füllwalze kann somit die Masse der Formwalze zuführen und in die Formvertiefungen an der Mantelfläche der Formwalze drücken. Das Abstandselement ist in seiner Länge zwischen Füllwalze und Formwalze derart kurz gestaltet, dass es im Bereich des Abstandselementes nicht zu einem unerwünschten Verfestigen der Masse kommt, bevor diese die Formvertiefungen erreicht. Das Abstandselement kann gegebenenfalls auch beheizt sein, um ein Verfestigen beziehungsweise Erstarren der Masse vor dem Eintritt in die Formvertiefungen zu verhindern. Das heißt, über die Füllwalze und gegebenenfalls das Abstandselement kann die Masse während der Zuführung temperiert werden, sodass die Viskosität in dem genannten Bereich gehalten wird, welcher es ermöglicht, dass die Masse in die Formvertiefungen fließt, beziehungsweise gestrichen wird. Dadurch, dass das Abstandselement auf der Mantelfläche der Formwalze gleitet, wird die Masse von den Mantelflächenbereichen neben den Formvertiefungen abgestrichen, sodass dann, wenn die Mantelfläche der Formwalze das Abstandselement passiert hat, nur noch die Masse in den Formvertiefungen verbleibt und dort aushärten kann.

Die Formmaschine weist weiter bevorzugt ein die Formwalze in einem Umfangsbereich umschließendes und sich in einem Entnahmebereich von der Formwalze wegerstreckendes Entnahmeband auf. Die in den Formvertiefungen liegenden Produkte treten mit dem Entnahmeband in Kontakt und werden über das Entnahmeband, welches sich in tangentialer Richtung von der Formwalze wegerstreckt, aus den Formvertiefungen entnommen bzw. herausgezogen und von der Formwalze weg transportiert. Das Entnahmeband wird in dem umschließenden Umfangsbereich mit der Formwalze mitbewegt. In diesem Umfangsbereich können die Produkte mit dem Entnahmeband in Anlage treten. An der Stelle, an welcher das Entnahmeband sich in tangentialer Richtung von der Formwalze wegerstreckt, werden die Produkte dann aus den Formvertiefungen entnommen. Vorzugweise erstreckt sich das Entnahmeband an der Unterseite der Formwalze im Wesentlichen in horizontaler Richtung von der Formwalze weg. Die Füllwalze ist vorzugsweise an der Oberseite der Formwalze angeordnet, sodass die Masse der Formwalze an der Oberseite zugeführt wird, wobei die Zufuhr der Masse durch die Schwerkraft begünstigt wird. Während der Drehung der Formwalze von der Oberseite zur Unterseite verbleibt die Masse in den Formvertiefungen und kann während dieser Bewegung in den Formvertiefungen so weit aushärten, dass das Produkt derart formstabil ist, dass es aus der Formvertiefung entnommen werden kann.

Diese Formmaschine hat den Vorteil, dass Fruchtgummis und ähnliche Produkte in einem kontinuierlichen Prozess hergestellt werden können und dass keine Aushärtung in der Form über mehrere Stunden erforderlich ist. Die Zufuhr einer erwärmten und temperierten und/oder in der beschriebenen Weise gemischten Masse zu der Formwalze ermöglicht es, die Masse mit einer Viskosität in dem oben genannten Viskositätsbereich zuzuführen, so dass sie eine ausreichende Fließfähigkeit hat, um die Formvertiefungen zu füllen, im Anschluss aber derart schnell verfestigt beziehungsweise aushärtet, dass die Produkte nach kurzer Zeit aus den Formvertiefungen entnommen werden können. Dies kann insbesondere durch Anpassung des Gelierzeitpunktes mit der oben beschriebenen Mischeinrichtung ermöglicht werden.

Die Formwalze und die Füllwalze sind vorzugsweise mit zumindest einem Drehantrieb derart verbunden, dass die Formwalze und die zumindest eine Füllwalze in entgegengesetzten Drehrichtungen angetrieben werden. So wird die Masse von der Füllwalze zu der Formwalze hinbewegt und durch die entgegengesetzte Bewegung in den Spalt zwischen Form- und Füllwalze gedrückt.

Das Entnahmeband ist vorzugsweise derart angetrieben, dass sich die Bandoberfläche in dem die Formwalze umschließende Umfangsbereich mit der Mantel- bzw. Oberfläche der Formwalze bewegt, das heißt mit derselben Geschwindigkeit wie die Mantelfläche der Formwalze. Das Entnahmeband weist vorzugsweise einen separaten Antrieb auf oder ist mit dem Antrieb der Formwalze über geeignete Getriebemittel gekoppelt, sodass es sich in entsprechender Geschwindigkeit bewegt. Alternativ kann es direkt durch die Formwalze angetrieben werden. Das Entnahmeband ist als Schlaufe ausgebildet, welche über entsprechende Rollen oder Walzen umgelenkt wird. Die Oberfläche des Entnahmebandes bewegt sich in einer Richtung von der Formwalze weg, so dass die entnommenen Produkte von der Formwalze wegbewegt werden. An seinem Ende kann das Entnahmeband gegebenenfalls die Produkte an weitere Fördereinrichtungen übergeben oder sie können von Hand abgenommen werden.

Gemäß einer weiteren Ausgestaltung der Erfindung weist die Formmaschine eine geheizte Produktzuführeinrichtung auf, welche dazu ausgebildet ist, die zu formende Masse definiert zu temperieren, vorzugsweise auf eine Temperatur ≤90°C, wobei die Masse eine Viskosität im Bereich von 10000 bis 80000 mPas aufweist. Eine solche Viskosität sichert die Formbarkeit in den Formvertiefungen, ermöglicht aber bei einer durch Abkühlen aushärtenden Masse eine schnelle Oberflächenverfestigung in den Formvertiefungen. Die Produktzuführeinrichtung kann einen externen Kocher und/oder Mischer, insbesondere eine Mischeinrichtung, wie sie vorangehend beschrieben wurde, aufweisen. Die Produktzuführeinrichtung ist ferner bevorzugt so ausgebildet, dass die so temperierte und/oder in ihrer Viskosität eingestellte Masse der Füllwalze, beziehungsweise in den Raum zwischen Füllwalze und Formwalze zugeführt wird. Dies erfolgt vorzugsweise kontinuierlich. In einer alternativen Ausführungsform könnte vor der Füllwalze ein Puffervolumen ausgebildet sein, in dem stets ein solches Volumen der Masse vorgehalten wird, dass die Produktion beziehungsweise das Formen durch die Formwalze kontinuierlich weiterlaufen kann, auch wenn die Masse aus der Produktzuführeinrichtung diskontinuierlich oder chargenweise zugeführt wird. Die Temperierung von ≤ 90°C gewährleistet ein schnelles Aushärten der Masse in den Formvertiefungen der Füllwalze.

Das Entnahmeband ist vorzugsweise in zumindest einem Abschnitt, welcher in dem sich von der der Formwalze wegerstreckenden Teil gelegen ist, gekühlt. Durch die Kühlung des Entnahmebandes wird das weitere Aushärten beziehungsweise Verfestigen der aus der Formwalze entnommenen Produkte beschleunigt, sodass diese dann von dem Entnahmeband problemlos abgenommen und weiterverarbeitet, beispielsweise verpackt werden können. Das Entnahmeband wird vorzugsweise auf eine Temperatur ≤ 20°C und weiter bevorzugt ≤10°C gekühlt. Zur Kühlung kann sich das Entnahmeband durch einen Kühltunnel erstrecken, sodass nicht nur das Band gekühlt wird, sondern auch die auf dem Band angeordneten Produkte gekühlt werden, wenn sie den Kühltunnel passieren. Alternativ oder zusätzlich kann unterhalb des Entnahmebandes eine Kühleinrichtung angeordnet sein. Beispielsweise kann das Entnahmeband über eine gekühlte Fläche geführt werden, sodass damit das Entnahmeband und die darauf angeordneten Produkte von unten gekühlt werden.

Die Formvertiefung und das Entnahmeband sind vorzugsweise so ausgestaltet, dass eine Haftkraft beziehungsweise die Adhäsion zwischen dem Entnahmeband und dem aus der Masse geformtem Produkt größer ist als eine Haftkraft beziehungsweise Adhäsion zwischen der Formvertiefung und dem aus der Masse geformten Produkt. Dadurch wird erreicht, dass das Produkt an dem Entnahmeband anhaftet, wenn das Entnahmeband in dem Umschlingungsbereich an der Mantelfläche der Formwalze entlangläuft. In dem Bereich, in dem das Entnahmeband dann tangential von der Mantelfläche der Formwalze geführt ist, zieht das Entnahmeband durch die Haftkraft zwischen Entnahmeband und Produkt das Produkt aus den Formvertiefungen heraus. Material und Struktur des Entnahmebandes sind daher vorzugsweise so an das Produkt angepasst, dass eine gewünschte Anhaftung zwischen Produkt und Entnahmeband erreicht wird. Gegebenenfalls könnte ein Haftmittel auf das Entnahmeband aufgebracht werden, um das Anhaften der Produkte zu verbessern. Alternativ oder zusätzlich könnten die Formvertiefungen vor dem Einfüllen der Masse auch mit einem Trennmittel beschichtet werden, um die Haftkraft zwischen dem Produkt und der Oberfläche der Formvertiefung zu verringen. Ferner sind die Formvertiefungen bevorzugt so ausgebildet, dass keine Hinterschneidungen das Auslösen des Produktes erschweren, d.h. bevorzugt kein Formschluss zwischen dem Produkt und der Formvertiefung entsteht.

Gemäß einer weiteren bevorzugten Ausgestaltung der Erfindung weisen die Formvertiefungen jeweils eine geschlossene Oberfläche auf, welche weiter bevorzugt frei von Entformungsmitteln ist. Das heißt gemäß dieser Ausgestaltung sind keine Entformungsmittel vorgesehen, wie beispielsweise Luftdüsen oder bewegliche Stempel, welche das Produkt aus der Formvertiefung herausdrücken. Vorzugsweise wird das Produkt lediglich durch das Entnahmeband aus der Formvertiefung gezogen. Somit sind keine weiteren Mechaniken zum Entformen des Produktes aus der Formvertiefung erforderlich. Die begünstigt die Reinigbarkeit der Formvertiefungen und verbessert die Oberfläche der Produkte. Ferner ermöglicht dies einen einfachen Aufbau der Formwalze, da keine Luftzuführungen oder beweglichen Elemente im Inneren der Formwalze erforderlich sind.

Gemäß einer weiteren möglichen Ausführungsform der Erfindung weist die Formmaschine zwei rotierend angetriebene Füllwalzen auf, welche beabstandet zueinander angeordnet sind. Beide Füllwalzen sind vorzugsweise beheizt und vorzugsweise oberhalb der Formwalze angeordnet. So wird zwischen den beiden Füllwalzen oberhalb der Formwalze ein Freiraum gebildet, welcher der Aufnahme der zu formenden Masse dient und in welchen die Masse zum Beispiel von einer Mischeinrichtung, wie sie vorangehend beschrieben wurde, zugeführt wird. Zwischen jeder der Füllwalzen und der Formwalze ist vorzugsweise jeweils ein Abstandselement angeordnet, wie es oben beschrieben wurde und welche mit der Mantelfläche einer der Füllwalzen und mit der Mantelfläche der Formwalze in Kontakt ist. So wird zum einen der Freiraum zwischen Füllwalze und Mantelfläche der Formwalze verschlossen. Zum anderen wird ein Abstand zwischen der Füllwalze und der Formwalze geschaffen, der sicherstellt, dass in diesem Bereich ausreichend Masse vorgehalten wird, um die Formvertiefungen vollständig zu füllen. Ferner ermöglicht ein Aufnahmeraum für die Masse oberhalb der Formwalze, in diesem Bereich weitere Produktbestandteile der Masse zuzumischen, beispielsweise feste Bestandteile, welche im Inneren der Masse eingebettet werden sollen. Dies könnten beispielsweise Fruchtstücke sein.

Die Füllwalzen sind vorzugsweise gemeinsam mit der Formwalze über einen gemeinsamen Antrieb angetrieben, können jedoch auch separate Antriebe aufweisen, welche dann vorzugsweise mit dem Antrieb der Formwalze synchronisiert sind, so dass die Füllwalzen sich mit einer Geschwindigkeit drehen, bei welcher die Oberflächengeschwindigkeit im Wesentlichen der Oberflächengeschwindigkeit der Formwalze entspricht. Die beiden Füllwalzen drehen sich vorzugsweise in entgegengesetzten Richtungen, sodass eine der Füllwalzen entgegengesetzt zu der Formwalze und die anderer Füllwalze sich in derselben Drehrichtung wie die Formwalze dreht. Dabei dreht sich vorzugsweise diejenige Füllwalze, welche in der Drehrichtung der Formwalze weiter hinten gelegen ist, in derselben Drehrichtung wie die Formwalze.

Der Entnahmebereich, in welchem sich das Entnahmeband im Wesentlichen in tangentialer Richtung von der Formwalze wegerstreckt, ist vorzugsweise von einem Füllbereich, das heißt dem Bereich, in dem die Füllwalze angeordnet ist, in Umfangsrichtung der Formwalze in einem Winkel von mindestes 90°, weiter bevorzugt größer als 150° und besonders bevorzugt von im Wesentlichen 180° beabstandet. Dadurch wird erreicht, dass die Produkte über einen Drehwinkel von mehr als 90° bzw. mehr als 150°, vorzugsweise im Wesentlichen 180° in den Formvertiefungen verbleiben und in der Zeitdauer dieser Bewegung dort fest werden können. Die Formwalze bewegt sich vorzugsweise mit einer Oberflächengeschwindigkeit zwischen 0,5 und 5 Meter pro Minute. Dabei kann die Geschwindigkeit an die Aushärtezeit der Produkte angepasst werden, sodass sichergestellt ist, dass zumindest die Oberflächen der Produkte so weit ausgehärtet sind, dass die Produkte aus den Formvertiefungen entnommen werden können.

Neben der vorangehend beschriebenen Mischeinrichtung und der beschriebenen Formmaschine ist Gegenstand der Erfindung ein Verfahren zum Verarbeiten einer fließfähigen und gelierbaren Masse. Dieses Verfahren beinhaltet insbesondere eine Formgebung der gelierbaren Masse. Gemäß diesem Verfahren wird einer in einer Zuführleitung fließenden Grundmasse eine einem Geliervorgang auslösende Substanz kontinuierlich zugemischt. Diese gemischte Masse wird dann weiterverarbeitet, das heißt gegebenenfalls in geeigneter Weise geformt bzw. in Formen eingefüllt.

Erfindungsgemäß wird die genannte Substanz der Grundmasse in zumindest einem in der Zuführleitung gelegenen Mischbereich zugemischt. Die Verweildauer der Grundmasse mit der zugemischten Substanz stromabwärts des Mischbereiches wird erfindungsgemäß durch Veränderung der Position des Mischbereiches eingestellt. Das heißt bevorzugt kann der zurückzulegende Weg von dem Mischbereich bis zu einer Formgebung der Masse, insbesondere zum Einfüllen in einer Form, verlängert oder verkürzt werden, um die Verweildauer anzupassen. Dabei kann zum einen der Weg so angepasst werden, dass bei unterschiedlichen Fließgeschwindigkeiten die Verweildauer im Wesentlichen konstant bleibt. Alternativ ist es jedoch auch möglich, die Verweildauer zu verändern, um sie beispielsweise an unterschiedliche Gelierzeitspannen verschiedener Produkte anpassen zu können. Diesbezüglich wird auf die obige Beschreibung der Mischeinrichtung verwiesen. Es ist zu verstehen, dass oben beschriebene bevorzugte Merkmale der Mischeinrichtung ebenfalls bevorzugte Merkmale des Verfahrens darstellen.

Die mit der Substanz gemischte Grundmasse wird bevorzugt in einer Form geformt und nach zumindest teilweise erfolgtem Gelieren aus der Form entnommen. Die Anpassung der Verweildauer ermöglicht es dabei den Gelierzeitpunkt so einzustellen, dass die Viskosität eine ausreichende Fließfähigkeit zum Einfüllen in die Form ermöglicht, in der Form das Produkt aber so geliert, dass es nach einer vorbestimmten Zeitspanne formstabil aus der Form entnommen werden kann. Dazu ist die Zeitspanne zwischen dem Zumischen der Substanz zu der Grundmasse und dem Einbringen der Masse in die zumindest eine Form durch eine Veränderung des in Fließrichtung gegebenen Abstandes des Mischbereiches von der Form einstellbar. Auf diese Weise kann die Anlage so eingestellt werden, dass das formstabile Verfestigen der Masse bevorzugt erst in der Form einsetzt.

Die Grundmasse enthält vorzugsweise ein Geliermittel, beispielsweise ein Pektin und die zugemischte Substanz enthält bevorzugt einen Aktivator, besonders bevorzugt eine Säure. Bei Verwendung von Pektinen setzt das Gelieren in der Regel erst ein, wenn eine Säure zugemischt wird. Dies ermöglicht es, die Grundmasse, beispielsweise eine Fruchtgummimischung zunächst über einen längeren Zeitraum fließfähig zu halten, dann einer Mischeinrichtung zuzuführen, in der der Aktivator, bevorzugt die Säure zugemischt wird und anschließend gezielt in eine Form einzubringen, sodass die formstabile Verfestigung in der Form einsetzt.

Weiter bevorzugt oder alternativ ist das Verfahren ein Verfahren zum Herstellen von formstabilen Produkten aus einer Masse mit einer Viskosität im Bereich von 10000 bis 80000 mPas. Dieses Verfahren kann mit oder ohne die beschriebene Zumischung einer einen Geliervorgang auslösenden Substanz ausgeführt werden. Das Verfahren wird bevorzugt unter Verwendung einer Formmaschine, wie sie vorangehend beschrieben wurde, ausgeführt. Bevorzugte Ausgestaltungen der Formmaschine, welche zuvor beschrieben worden sind, sind auch als bevorzugte Verfahrensmerkmale anzusehen. Entsprechend sind nachfolgend beschriebene bevorzugte Verfahrensmerkmale auch als bevorzugte Ausgestaltungsmerkmale der Formmaschine zu verstehen.

Gemäß dem erfindungsgemäßen Verfahren wird eine fließfähige, und vorzugsweise erwärmte, Masse, aus welcher die Produkte geformt werden sollen, mit einer Viskosität im Bereich von 10000 bis 80000 mPas bereitgestellt. In einer speziellen Verfahrensvariante wird die Masse ferner erwärmt und temperiert. Die Masse ist mit dieser Viskosität ausreichend fließfähig, um die Produkte durch Einfüllen der Masse in Formvertiefungen auszuformen, aber kann schnell derart aushärten, dass sich die Oberfläche der Masse verfestigt, sodass das Produkt aus den Formvertiefungen entnommen werden kann. Die bereitgestellte fließfähige Masse wird, ggf. im erwärmten Zustand, vorzugsweise in Formvertiefungen einer rotierenden Formwalze eingebracht. Dies erfolgt bevorzugt an der Oberseite der Formwalze, sodass die fließfähige Masse in die Formvertiefungen eingegossen oder eingestrichen werden kann. Während der Drehung der Formwalze verfestigt sich die Masse in den Formvertiefungen derart, dass das Produkt danach aus der Formvertiefungen entnehmbar ist. Dabei muss die Masse nicht vollständig aushärten, es ist ausreichend, dass sich die Oberfläche der Masse so verfestigt, dass das Produkt formstabil ist und aus der Formvertiefung entnommen werden kann. Das Verfestigen kann zum Beispiel durch Abkühlen und/oder Gelieren erfolgen.

Bevorzugt wird die fließfähige Masse in einem Füllbereich in die Formvertiefungen eingefüllt. Dieser Füllbereich ist bevorzugt an der Oberseite Formwalze gelegen. In einem Entnahmebereich werden die geformten Produkte aus den Formvertiefungen entnommen. Der Entnahmebereich ist dabei von dem Füllbereich in Umfangsrichtung der Formwalze bevorzugt in einem Winkel von mindestens 90°, weiter bevorzugt in einem Winkel ≥ 150°, idealerweise in einem Winkeln von im Wesentlichen 180° beabstandet. Auf diese Weise wird erreicht, dass die Entnahme im Bereich der Unterseite der Formwalze erfolgt. So kann die Entnahme durch die Schwerkraft unterstützt werden. Ferner können die aus den Formvertiefungen entnommenen Produkte direkt auf einem Entnahmeband zu liegen kommen und durch Bewegung des Entnahmebandes in horizontaler Richtung weggefördert werden. Das Entnahmeband liegt, wie oben anhand der Formmaschine beschrieben, bevorzugt in einem Umfangsbereich an der Formwalze an, sodass es zu einer Anhaftung von den Produkten an dem Entnahmeband kommen kann.

Bevorzugt werden die Produkte aus den Formvertiefungen von außen durch ein an den Produkten anhaftendes Entnahmeelement, z.B. das genannte Entnahmeband, herausgezogen, ohne weitere Mechaniken zum Entformen.

Gemäß einer weiteren Ausgestaltung des Verfahrens wird die fließfähige Masse erwärmt in die Formvertiefungen eingebracht. Vorzugsweise hat die erwärmte fließfähige Masse beim Einfüllen in die Formvertiefungen eine Temperatur ≤ 90°C. Eine möglichst niedrige Einfülltemperatur begünstigt das schnelle Aushärten beziehungsweise Verfestigen in den Formvertiefungen. Bei Entnahme aus den Formvertiefungen haben die Produkte vorzugsweis eine Temperatur ≤ 50°C, wobei die Temperaturen und die Masse so aufeinander abgestimmt sind, dass das Produkt bei der Entnahme aus den Formvertiefungen eine ausreichende Festigkeit aufweist, um eigenstabil zu sein. Besonders bevorzugt erfolgt somit eine Abkühlung von ungefähr 40°C zwischen dem Einfüllen und der Entnahme. Dieser Abkühlprozess kann durch Konvektion und/oder zusätzliche Kühlung, beispielsweise Kühlung der Formwalze erfolgen. Nach der Entnahme können die Produkte weiter abgekühlt werden.

Nachfolgend wird die Erfindung beispielhaft anhand der beigefügten Figuren beschrieben. In diesen zeigt:
- Fig. 1: eine schematische Schnittansicht einer Formmaschine gemäß einer ersten Ausführungsform,
- Fig. 2: eine schematische Schnittansicht einer Formmaschine gemäß einer zweiten Ausführungsform,
- Fig. 3: eine Ausschnittvergrößerung aus Figur 1, und
- Fig. 4: schematisch eine Mischeinrichtung zur Bereitstellung einer zu formenden Masse.

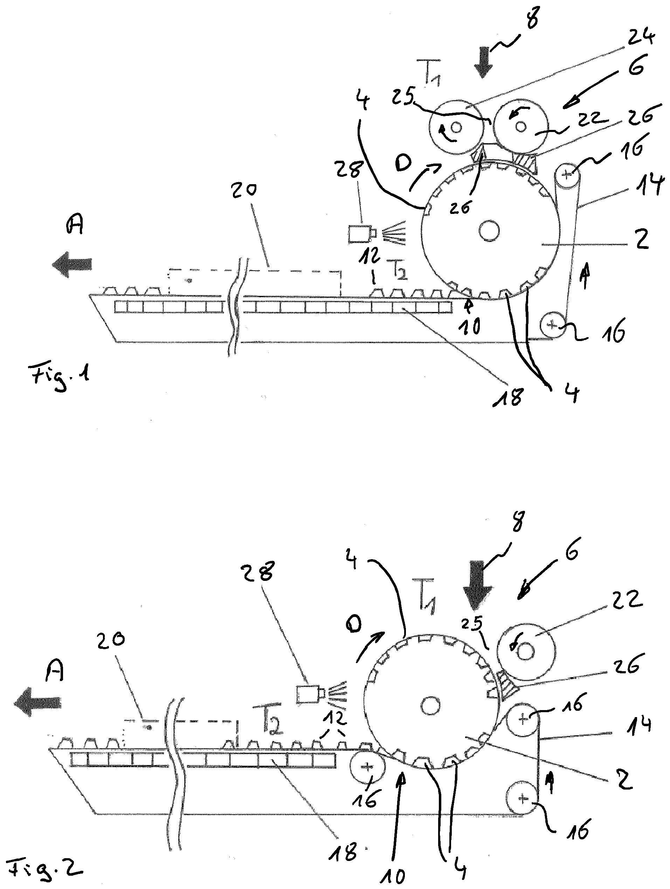

Die Formmaschine weist in beiden Ausführungsbeispielen gemäß Figuren 1 und 2 eine Formwalze 2 auf, welche derart drehend angetrieben ist, dass sie sich in der Drehrichtung D dreht. Über den Umfang der Formwalze 2 verteilt sind in die Mantel- bzw. Oberfläche der Formwalze Formvertiefungen 4 eingebracht, welche die Negativformen für die zu formenden Produkte bilden. Oberhalb der Formwalze 2 ist bei beiden Ausführungsbeispielen ein Füllbereich 6 gelegen, in welchem die zu formende Masse 8 in die Formvertiefungen 4 der Formwalze 2 eingebracht wird. An der Unterseite der Formwalze 2 ist ein Entnahmebereich 10 gelegen, in welchem die fertig geformten Produkte 12 aus den Formvertiefungen 4 entnommen werden.

Zur Entnahme der Produkte 12 aus den Formvertiefungen 4 dient in beiden Ausführungsbeispielen allein ein Entnahmeband 14, welches über Rollen 16 so geführt ist, dass es in einem Umfangsbereich die Formwalze 2 umschließt und sich in diesem Bereich gemeinsam mit der Formwalze 2 so bewegt, dass das Entnahmeband 14 und die Mantelfläche der Formwalze 2 sich mit derselben Geschwindigkeit bewegen. Das Entnahmeband 14 umschließt in diesen Ausführungsbeispielen die Formwalze 2 in einem Winkel von im Wesentlichen 90° zwischen dem Füllbereich 6 und den Entnahmebereich 10. In diesem Umschlingungsbereich kommt das Entnahmeband 14 mit den Produkten 12 in den Formvertiefungen 4 zur Anlage und die Produkte 12 haften an der Oberfläche des Entnahmebandes 14 an. In dem Entnahmebereich 10, in welchem sich das Entnahmeband 14 von der Formwalze 2 im Wesentlichen in tangentialer Richtung wegerstreckt, werden die Produkte 12 aus den Formvertiefungen 4 heraus bewegt bzw. herausgezogen und auf dem Entnahmeband 14 in Richtung des Pfeils A weiter abtransportiert. Das Entformen erfolgt somit ohne weitere Entformungsmittel oder Mechaniken allein durch Herausziehen der Produkte 12 aus den Formvertiefungen 4 mittels des Entnahmebandes 14. In dem sich an den Entnahmebereich 10 anschließenden Bereich kann unter dem Entnahmeband 14 eine Kühleinrichtung 18 angeordnet sein. Alternativ oder zusätzlich kann das Entnahmeband 14 durch einen Kühltunnel 20 laufen, sodass die geformten Produkte 12 durch den Kühltunnel 20 gefördert werden. Über die Kühleinrichtung 18 und/oder den Kühltunnel 20 werden die Produkte 12 gekühlt, sodass sie weiter aushärten können.

Für die Zufuhr der zu formenden Masse in viskosen oder flüssigen Zustand in einem Viskositätsbereich zwischen 10000 und 80000 mPas sind im ersten Ausführungsbeispiel gemäß Figur 1 zwei Füllwalzen 22, 24 vorgesehen. Die Füllwalzen 22, 24 sind in ihrem Durchmesser kleiner als die Formwalze 2 und erstrecken sich mit in ihren Drehachsen parallel zur Drehachse der Formwalze 2. Die in Drehrichtung D der Formwalze 2 vordere Füllwalze 22 dreht sich entgegengesetzt zu der Formwalze 2, während sich die beabstandete hintere Füllwalze 24 gleichläufig zu der Formwalze 2 dreht. So drehen sich die Füllwalzen 22 und 24 so, dass die Masse 8 in Richtung des Pfeils in den Freiraum 25 zwischen den Füllwalzen 22 und 24 gedrückt beziehungsweise gezogen wird. Die Masse wird beispielsweise mit einer Temperatur T₁ zugeführt, welche vorzugsweise ≤ 90°C ist. Zumindest eine der Füllwalzen 22, 24, bevorzugt beide Füllwalzen 22, 24 kann beheizt sein, um die Masse 8 auf der Temperatur T₁ zu halten und zu verhindern, dass sich die Masse 8 in dem Freiraum 25 verfestigt, bevor sie in die Formvertiefungen 4 eingebracht wird. Die Füllwalzen 22, 24 sind in radialer Richtung von der Formwalze 2 beabstandet, wobei die dadurch entstehenden Abstände zwischen den Füllwalzen 22, 24 und der Formwalze 2 durch Abstandselemente 26 verschlossen sind. Die Abstandselemente 26 liegen an der Mantelfläche der Formwalze 2 und an den Mantel- bzw. Oberflächen jeweils einer Füllwalze 22, 24 an. In dem Freiraum 25 zwischen den beiden Abstandselementen 26 wird die Masse 8 in die Formvertiefungen 4 eingebracht und durch die Abstandselemente 26 von der Mantelfläche der Formwalze 2 im Umgebungsbereich der Formvertiefungen 4 abgestrichen. Auch die Abstandselemente 26 können zur Temperierung der Masse 8 geheizt sein. Die flüssige beziehungsweise viskose Masse wird mit der Temperatur T₁ in die Formvertiefungen 4 eingebracht und erstarrt beziehungsweise verfestigt sich zwischen dem Füllbereich 6 und dem Entnahmebereich 10 während der Drehung der Formwalze 2 in der Drehrichtung D. Bei der Entnahme haben die Produkte 12 eine Temperatur T₂ welche bereits ≤ 50°C ist. Bei dieser Temperatur ist insbesondere die Außenseite der Produkte 12 so weit verfestigt, dass die Produkte 12 eigenstabil sind und eigenstabil auf dem Entnahmeband 14 liegen und dort weiter abgekühlt werden können. Vor dem Befüllen der Formvertiefungen 4 kann die Formwalze 2 über eine Sprüheinrichtung 28 mit einem Trennmittel eingesprüht werden, welches die Haftung der Masse 8 in den Formvertiefungen 4 reduziert und die Entnahme der Produkte12 begünstigt.

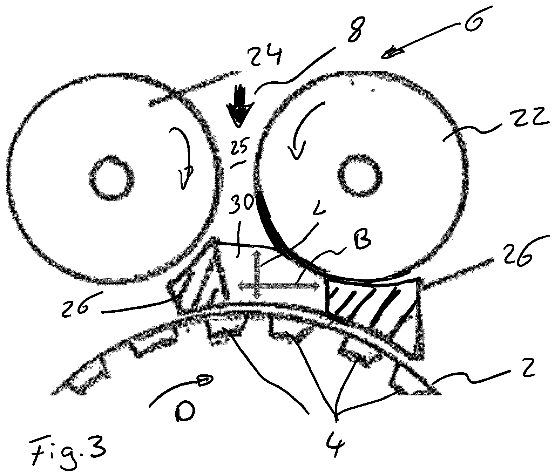

Figur 3 zeigt eine Ausschnittvergrößerung des Füllbereiches 6 aus dem Ausführungsbeispiel gemäß Figur 1. Die beiden Abstandselemente 26 bilden gemeinsamen einen Füllblock mit einer Öffnung 30 in seinem Inneren. Durch die Öffnung 30 wird die Masse 8 aus dem Freiraum 25 zwischen den Füllwalzen 22, 24 den Formvertiefungen 4 beziehungsweise Formnestern 4 zugeführt. Die Öffnung 30 in dem Füllblock beziehungsweise zwischen den Abstandselementen 26 ist so dimensioniert, dass das Verhältnis zwischen der Länge L in der Strömungsrichtung der Masse 8 zu der Breite B in der Drehrichtung D der Formwalze 2 vorzugsweise in einem Verhältnis L/D zwischen 1/1,25 und 1/0,77 beträgt.

In dem Ausführungsbeispiel gemäß Figur 2 ist der Füllbereich 6 anders als in dem Ausführungsbeispiel gemäß Figur 1 ausgestaltet, nämlich mit leidglich einer Füllwalze 22 und nur einem Abstandselement 26 zwischen dieser Füllwalze 22 und der Formwalze 2. Die Füllwalze 22 ist gegenüber dem ersten Ausführungsbeispiel in der Drehrichtung D der Formwalze 2 etwas nach unten verschoben angeordnet, sodass zwischen der Füllwalze 22 und der Formwalze 2 ein Freiraum 25 entsteht, in welchen die Masse 8 eingefüllt wird. Auch hier sind die Füllwalze 22 und gegebenenfalls das Abstandselement 26 temperiert, um die Masse 8 mit der definierten Temperatur T₁ in flüssiger beziehungsweise viskoser Form einzufüllen, wobei die Masse 8 anschließend bei der weiteren Drehung der Formwalze 2 in den Formvertiefungen 4 fest wird, bevor die Formvertiefungen 4 den Entnahmebereich 10 erreichen.

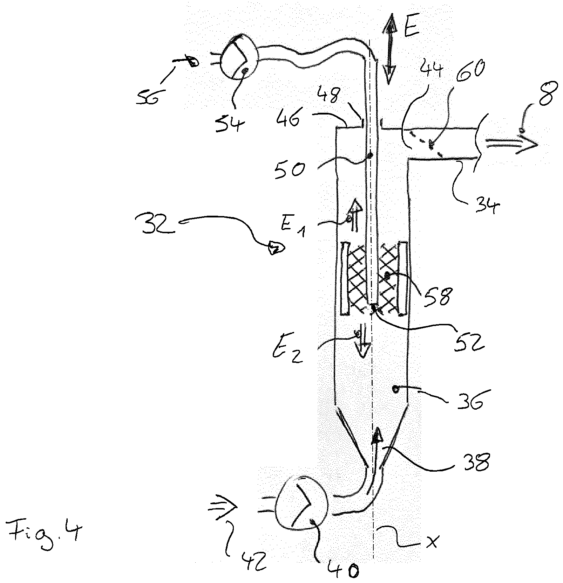

Alternativ oder zusätzlich zu der Verfestigung der Masse 8 durch Abkühlung kann die Verwässerung durch einen chemisch ausgelösten Gelierprozess erfolgen. Dazu ist es möglich einer Grundmasse eine Substanz, welche den Geliervorgang auslöst bzw. ermöglicht, zu einen bestimmten Zeitpunkt zuzumischen, sodass das Verfestigen der Masse 8 in den Formvertiefungen 4 erfolgt, wie es vorangehend beschrieben wurde. Der Freiraum 25, über welchen die Masse 8 den Formvertiefungen 4 zugeführt wird, ist dazu bevorzugt mit einer Mischeinrichtung 32 verbunden, wie sie in Figur 4 gezeigt und nachfolgend beschrieben wird.

Figur 4 zeigt eine Mischeinrichtung 32 zur Bereitstellung der Masse 8, welche dem Füllbereich 6 der Formmaschine zugeführt wird. Dazu kann die Mischeinrichtung 32 über eine Rohrleitung 34 mit dem Füllbereich 6 verbunden sein. Der Transfer der Masse 8 kann jedoch auch in anderer Weise erfolgen. Die Mischeinrichtung 32 weist als zentralen Bestandteil einen Leitungsabschnitt 36 auf, welche einen Pufferspeicher oder ein Pufferrohr bildet. Der Leitungsabschnitt 36 ist rohrförmig und weist an einem ersten Axialende einen Eingang 38 auf, welcher in diesem Ausführungsbeispiel zentral am Axialende des Leitungsabschnittes 36 angeordnet ist. Stromaufwärts des Einganges 38 ist eine Förderpumpe 40 angeordnet, welche vorzugsweise als Dosierpumpe ausgebildet ist. Über die Förderpumpe 40 wird eine Grundmasse 42 in gewünschter Fördermenge, vorzugsweise kontinuierlich in den Leitungsabschnitt 36 gefördert. Die Grundmasse 42 kann beispielsweise eine Fruchtgummimasse, das heißt eine zuckerbasierte Masse sein, welche ein Geliermittel wie ein Pektin enthält.

An seinem zweiten entgegengesetzten Axialende weist der Leitungsabschnitt 36 einen Ausgang 44 auf, welcher sich in radialer Richtung bezogen auf die Längsachse X des Leitungsabschnittes 36 erstreckt und in die Rohrleitung 34 mündet. Die benachbart zu dem Ausgang 44 gelegene Stirnseite des Leitungsabschnittes 36, das heißt die Stirnseite, welche dem Eingang 38 entgegengesetzt ist, ist durch eine Wandung 46 verschlossen, welche zentral eine Ausnehmung 48 aufweist. Durch die Ausnehmung 48 erstreckt sich ein Zumischrohr 50 in das Innere des Leitungsabschnittes 36. Das Zumischrohr 50 ist in der Ausnehmung 48 axial beweglich geführt, sodass es in der Richtung des Pfeils E entlang der Längsachse X vor und zurück bewegt werden kann. So kann die Eintauchtiefe in den Leitungsabschnitt 36 variiert werden. Das Zumischrohr 50 ist dazu durch eine geeignete Dichtungsanordnung in der Ausnehmung 48 gedichtet und beweglich geführt. An seinem ersten Axialende, welches im Inneren des Leitungsabschnittes 36 gelegen ist, weist das Zumischrohr 50 eine Mündungsöffnung 52 auf, welche in diesem Fall durch das offene Axialende des Zumischrohrs gebildet wird. An seinem entgegengesetzten Axialende, welches außerhalb des Leitungsabschnittes 36 gelegen ist, ist das Zumischrohr 50 mit einer Dosierpumpe 54 verbunden, welche eingangsseitig mit einer Zufuhr oder einem Speicherbehälter für eine Substanz 56 verbunden ist. Die Substanz 56 kann beispielsweise ein Aktivator oder eine Säure sein. Übe die Dosierpumpe 54 kann die Substanz 56 in das Innere des Leitungsabschnittes 36 gefördert werden und dort der Grundmasse 42, welche über die Förderpumpe 40 zugeführt wird, kontinuierlich zugemischt werden. Dazu ist im Inneren des Leitungsabschnittes 36 ein stationärer Mischer 58 angeordnet. Der Mischer 58 weist eine Struktur von strömungsführenden Elementen, wie beispielsweise Stegen oder Rippen auf, welche zu einer Durchmischung der durch den Mischer 58 fließenden Masse führt. Der stationäre Mischer 58 ist am axialen Ende des Zumischrohres 50 derart befestigt, dass die Mündungsöffnung 52 des Zumischrohres 50 zentral in den Mischer 58 mündet, und zwar an dessen stromaufwärtigem Ende. So wird erreicht, dass die über die Dosierpumpe 54 zugeführte Substanz 56 mit der Grundmasse 42 beim Durchströmen des Mischers 58 vermischt wird.

So wird in dem Mischer 58 ein Mischbereich geschaffen, in dem die Mischung der Substanz 56 mit der Grundmasse 42 erfolgt. Dadurch, dass der Mischer an dem Zumischrohr 50 befestigt ist, kann er gemeinsam mit dem Zumischrohr 50 in axialer Richtung X in dem Leitungsabschnitt 36 verschoben werden, wodurch der gesamte Mischbereich axial in dem Leitungsabschnitt 36 verschoben wird. Dadurch kann die Verweildauer der gemischten Masse stromabwärts des Mischers 58 verändert werden. Wenn der Mischbereich in Richtung des Pfeils E₁ näher zu dem Ausgang 44 verschoben ist, verkürzt sich die Strecke zwischen dem Mischer 58 und dem Ausgang 44, sodass der Förderweg für die gemischte Masse hin zu dem Ausgang 44 und damit auch zu dem Füllbereich 6 verkürzt wird. Bei konstanter Fließgeschwindigkeit, welche durch die Förderpumpe 40 definiert wird, erreicht die gemischte Masse den Füllbereich 6 somit schneller. So kann der Förderweg angepasst werden, um bei einer kürzeren Gelierzeit der Rezeptur den Förderweg der gemischten Masse 8 so zu verkürzen, dass der Gelierzeitpunkt so gelegt wird, dass die Masse in ausreichend viskosem Zustand in die Formvertiefungen 4 eingebracht wird und erst dort so weit geliert, dass Formstabilität erreicht wird. Wenn hingegen eine Rezeptur verarbeitet wird, bei welcher das Gelieren nach dem Mischen von Grundsubstanz 42 und der zugeführten Substanz 56 länger dauert, kann der Mischer 58 in Richtung des Pfeils E₂ weiter von dem Ausgang 44 entfernt werden, sodass der Förderweg für die gemischte Masse bis zu dem Füllbereich 6 verlängert wird und somit mehr Zeit für den Geliervorgang bis zum Eintritt in die Formvertiefungen 4 verbleibt.

Darüber hinaus ist auch eine Anpassung an unterschiedlich Fließgeschwindigkeiten möglich, wenn beispielsweise eine Formwalze 2 mit kleineren oder weniger Formvertiefungen 4 zum Einsatz kommt, muss weniger Masse 8 pro Zeiteinheit der Formwalze 2 zugeführt werden. Da die Leitungsquerschnitte in der Mischeinrichtung 32 jedoch konstant sind, erfordert dies eine geringeren Fließgeschwindigkeit. In einem solchen Fall kann der Förderweg durch Verschieben des Mischer 58 in der Pfeilrichtung E₁ soweit verkürzt werden, dass die Zeitspanne vom Mischen in dem Mischer 58 bis zum Eintritt in die Formvertiefungen 4 im Wesentlichen nicht verlängert wird, sodass weiterhin das Gelieren in den Formvertiefungen im gewünschten Maße einsetzt.

In dem Ausgang 44 ist in diesem Ausführungsbeispiel ein Sieb 60 angeordnet, welches dazu dient, eventuelle Verklumpungen aufzulösen, indem diese mit der fließenden Masse durch das Sieb 60 gedrückt werden. Derartige Verklumpungen können beispielsweise auftreten, wenn es bereits im Bereich des Mischers 58 zum verfrühten Gelieren von Teilen der Masse 8 kommt.

Zur Positionierung und zum axialen Verstellen des Zumischrohrs 50 und des Mischers 58 kann eine manuelle Verstellbarkeit vorgesehen sein, für welche beispielsweise an der Ausnehmung 48 eine geeignete Klemmeinrichtung und gegebenenfalls am Zumischrohr 50 eine geeignete Skala zum Anzeigen der Eindringtiefe angeordnet sein kann. Alternativ kann jedoch auch eine automatisierte Positionierung vorgesehen sein, indem das Zumischrohr 50 über eine geeignete Antriebseinrichtung, beispielsweise einem elektrischen oder pneumatischen Stellantrieb, vor und zurück bewegt wird. Dies ermöglicht eine Positionierung des Zumischrohrs 50 über eine Anlagensteuerung, die somit die axiale Position des Mischbereiches automatisiert in Abhängigkeit von Rezeptur und verwendeter Formwalze 2 einstellen kann.

### Bezugszeichenliste

- 2: Formwalze
- 4: Formvertiefungen
- 6: Füllbereich
- 8: Masse
- 10: Entnahmebereich
- 12: Produkt
- 14: Entnahmeband
- 16: Rollen
- 18: Kühleinrichtung
- 20: Kühltunnel
- 22,24: Füllwalzen
- 25: Freiraum
- 26: Abstandselemente, Füllblock
- 28: Sprüheinrichtung
- 30: Öffnung
- 32: Mischeinrichtung
- 34: Rohrleitung
- 36: Leitungsabschnitt
- 38: Eingang
- 40: Förderpumpe
- 42: Grundmasse
- 44: Ausgang
- 46: Wandung
- 48: Ausnehmung
- 50: Zumischrohr
- 52: Mündungsöffnung
- 54: Dosierpumpe
- 56: Substanz
- 58: Mischer
- 60: Sieb
- A: Förderrichtung
- D: Drehrichtung
- L: Länge
- B: Breite
- X: Längsachse

- E, E₁, E₂: Bewegungsrichtungen des Zumischrohres

## Patentansprüche

1. Mischeinrichtung (32) ausgebildet zur kontinuierlichen Bereitstellung einer gelierenden Masse (8) für eine Formmaschine, wobei die Mischeinrichtung (32) einen Eingang (38), einen Ausgang (44) und einen zwischen dem Eingang (38) und dem Ausgang (44) gelegenen Leitungsabschnitt (36) aufweist, in welchen zumindest eine Zumischleitung (50) mündet, über die eine zuzumischende Substanz (56) derart zuführbar ist, dass in einem Mischbereich (58) in dem Leitungsabschnitt (36) die zuzumischende Substanz (56) mit einer durch den Eingang (38) zugeführten Grundmasse (42) gemischt wird,
**dadurch gekennzeichnet, dass**
die Mischeinrichtung (32) derart ausgestaltet ist, dass der räumliche Abstand zwischen dem Ausgang (44) und dem Mischbereich (58), in welchem die zuzumischenden Substanz (56) mit der Grundmasse (42) gemischt wird, veränderbar ist.

2. Mischeinrichtung (32) nach Anspruch 1, **dadurch gekennzeichnet, dass** die zumindest eine Zumischleitung (50) mehrere Mündungsöffnungen (52) aufweist, welche von dem Ausgang (44) unterschiedlich weit beabstandet sind und individuelle Absperreinrichtungen aufweisen.

3. Mischeinrichtung (32) nach Anspruch 1 oder 2, **dadurch gekennzeichnet, dass** die zumindest eine Zumischleitung (50) zumindest eine Mündungsöffnung (52) aufweist, deren Position relativ zu dem Auslass veränderbar ist.

4. Mischeinrichtung (32) nach einem der vorangehenden Ansprüche, **dadurch gekennzeichnet, dass** die zumindest eine Zumischleitung (50), welche zumindest eine Mündungsöffnung (52) aufweist, mit einer Einstelleinrichtung verbunden ist, über welche der Abstand zwischen der zumindest eine Mündungsöffnung (52) und dem Ausgang (44) veränderbar ist, wobei die Einstelleinrichtung vorzugsweise einen Stellantrieb aufweist.

5. Mischeinrichtung (32) nach einem der vorangehenden Ansprüche, **dadurch gekennzeichnet, dass** die Mischeinrichtung (32) in dem Leitungsabschnitt (36) einen stationären Mischer (58) aufweist, in welchem die zumindest eine Zumischleitung (50) mündet und dessen Position relativ zu dem Ausgang (44) bevorzugt veränderbar ist.

6. Mischeinrichtung (32) nach einem der vorangehenden Ansprüche, **dadurch gekennzeichnet, dass** die Zumischleitung als Zumischrohr (50) ausgebildet ist, welches sich durch eine Ausnehmung (48) in einer Wandung (46) des Leitungsabschnittes (36) erstreckt und in der Ausnehmung (48) axial in Richtung seiner Längsachse (X) verschiebbar ist.

7. Mischeinrichtung (32) nach Anspruch 6, **dadurch gekennzeichnet, dass** sich die Längsachse (X) des Zumischrohres (50) in Richtung einer durch den Eingang (38) und den Ausgang (44) definierten Strömungsrichtung erstreckt.

8. Mischeinrichtung (32) nach einem der vorangehenden Ansprüche, **dadurch gekennzeichnet, dass** stromaufwärts des Einganges (38) zumindest eine Förderpumpe (40) zum Fördern der Grundmasse (42) angeordnet ist.

9. Formmaschine zum Herstellen von formstabilen Produkten aus einer formbaren und gelierbaren Masse (8), **gekennzeichnet durch** eine Mischeinrichtung (32) nach einem der vorangehenden Ansprüche, welche dazu ausgebildet ist die formbare Masse (8) bereitzustellen.

10. Formmaschine nach Anspruch 9, **gekennzeichnet durch** eine rotierend angetriebene Formwalze (2), in deren Mantelfläche Formvertiefungen (4) ausgebildet sind, wobei der Ausgang der Mischeinrichtung (32) mit einer Fülleinrichtung der Formwalze (2) verbunden ist.

11. Formmaschine, insbesondere nach Anspruch 9 oder 10, zum Herstellen von formstabilen Produkten aus einer Masse (8) mit einer Viskosität im Bereich von 10000 bis 80000 mPas, **gekennzeichnet durch**
eine rotierend angetriebene Formwalze (2), in deren Mantelfläche Formvertiefungen (4) ausgebildet sind,
zumindest eine beabstandet zu der Formwalze (2) angeordnete, rotierend angetriebenen und beheizten Füllwalze (22,24) , deren Drehachse sich parallel zu einer Drehachse der Formwalze (2) erstreckt,
ein zwischen der Füllwalze (22,24) und der Formwalze (2) angeordnetes Abstandselement (26), welches mit der Mantelfläche der Füllwalze (22, 24) und mit der Mantelfläche der Formwalze (2) in Kontakt ist, und
ein die Formwalze (2) in einem Umfangsbereich umschließendes und sich in einem Entnahmebereich (10) von der Formwalze (2) wegerstreckenden Entnahmeband (14).

12. Verfahren zum Verarbeiten einer fließfähigen und gelierbaren Masse (8), bei welchem einer in einer Zufuhrleitung fließenden Grundmasse (42) eine einen Geliervorgang auslösende Substanz (56) kontinuierlich zugemischt wird, **dadurch gekennzeichnet, dass** die Substanz (56) der Grundmasse (42) in zumindest einem in der Zufuhrleitung gelegen Mischbereich (58) zugemischt wird, und dass eine Verweildauer der Grundmasse (42) mit der zugemischten Substanz (56) stromabwärts des Mischbereiches (58) durch Veränderung der Position des Mischbereiches (58) eingestellt wird.

13. Verfahren nach Anspruch 12, **dadurch gekennzeichnet, dass** die mit der Substanz (56) gemischte Grundmasse (42) in zumindest einer Form geformt und nach zumindest teilweise erfolgtem Gelieren aus der Form entnommen wird, wobei eine Zeitspanne zwischen dem Zumischen der Substanz (56) zu der Grundmasse (42) und dem Einbringen der Masse (8) in die zumindest eine Form durch eine Veränderung des in Fließrichtung gegebenen Abstandes des Mischbereiches (58) von der Form eingestellt wird.

14. Verfahren nach Anspruch 12 oder 13, **dadurch gekennzeichnet, dass** die Grundmasse (42) ein Geliermittel, bevorzugt ein Pektin, enthält und die zugemischte Substanz (56) einen Aktivator, bevorzugt eine Säure enthält.

15. Verfahren, insbesondere nach einem der Ansprüche 12 bis 14, zum Herstellen von formstabilen Produkten aus einer Masse (8) mit einer Viskosität im Bereich von 10000 bis 80000 mPas, mit folgenden Schritten:
Bereitstellen einer fließfähigen Masse (8) mit einer Viskosität im Bereich von 10000 bis 80000 mPas,
Einbringen der fließfähigen Masse (8) in Formvertiefungen (4) einer rotierenden Formwalze (2),
Aushärten der Masse (8) innerhalb der Formvertiefungen (4) während der Drehung der Formwalze (2), wobei sich die Masse (8) derart verfestigt, dass sie aus den Formvertiefungen (4) entnehmbar wird,
Entnehmen der aus der verfestigten Masse (8) gebildeten Produkte (12) aus den Formvertiefungen (4).
